# EUROPEAN PATENT SPECIFICATION

(11) **EP 3 521 625 B1**
(45) Date of publication and mention of the grant of the patent: **12.10.2022**
(21) Application number: 17856570.1
(22) Date of filing: 17.08.2017
(51) Int. Cl.: F04C 18/02, F04C 28/22

(54) **GASEOUS FLUID COMPRESSION DEVICE**
GASFÖRMIGE FLUIDVERDICHTUNGSVORRICHTUNG
DISPOSITIF DE COMPRESSION DE FLUIDE GAZEUX

(30) Priority: 29.09.2016 DE 102016118525
(43) Date of publication of application: 07.08.2019
(73) Proprietor: Hanon Systems, Daejeon 34325 (KR)
(72) Inventor: KLOTTEN, Thomas, 50827 Köln (DE); KROECKER, Dennis, 51109 Köln (DE)
(74) Representative: Hoffmann Eitle
(86) International application number: PCT/KR2017/008956
(87) International publication number: WO 2018/062684

(56) References cited:
- EP-A2- 2 218 914
- WO-A1-2015/198516
- JP-A- 2001 132 670
- JP-A- 2012 229 650
- JP-A- 2015 086 765
- JP-B2- H0 668 276
- KR-A- 20140 095 827
- KR-B1- 100 446 213
- US-A1- 2016 160 646

## Description

### TECHNICAL FIELD

The present disclosure relates to an apparatus for compressing a gas-phase fluid, particularly a refrigerant. The apparatus includes a housing having a wall, a non-motional stator having a base plate and a helical wall extending from a first side of the base plate, and a motional orbiter having a base plate and a helical wall extending from the base plate. The base plates are disposed such that the wall of the stator and the wall of the orbiter engage with each other to define closed working chambers. The volumes and positions of the working chambers are changed in response to the motion of the orbiter.

### BACKGROUND ART

Compressors referred to as refrigerant compressors are used for movable applications to provide refrigerant through a refrigerant passage, particularly for air-conditioning systems for vehicles, which are well known in the art. These compressors are sometimes configured as piston compressors or scroll compressors that each have a variable stroke volume irrespectively of refrigerant. The compressors are driven by pulleys or in an electrical manner.

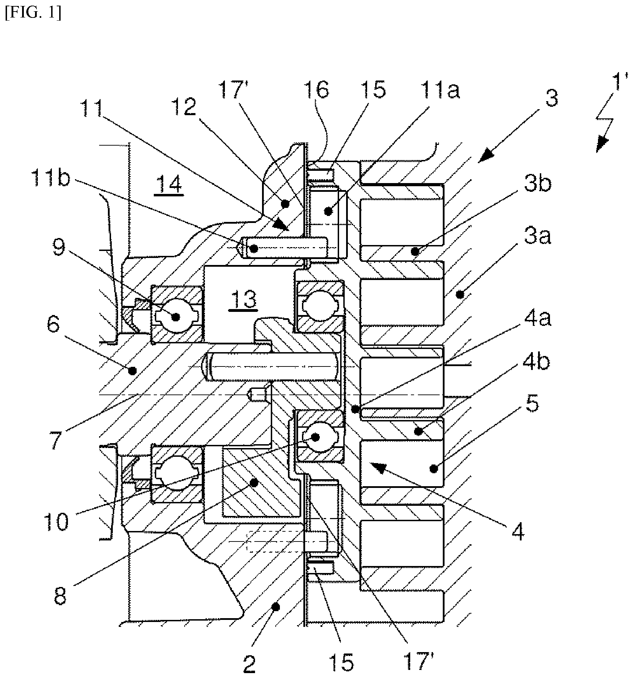

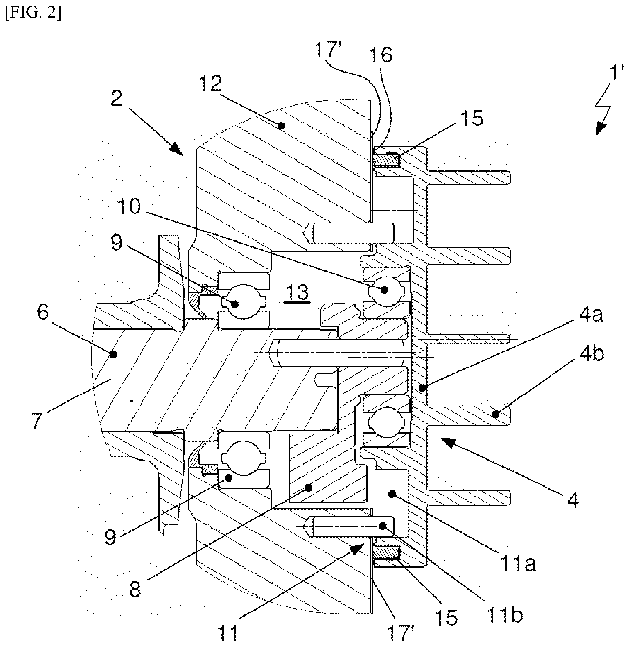

Figs. 1 and 2 illustrate a scroll compressor 1', which is well known in the art, in section. The conventional scroll compressor 1' includes a housing 2, a non-motional fixed stator 3, which has a disk-type base plate 3a and a helical wall 3b extending from the base plate 3a, and a motional orbiter 4 which has a disk-type base plate 4a and a helical wall 4b extending from the base plate 4a. In brief, the stator 3 referred to as a non-motional or fixed spiral 3 cooperates with the orbiter 4 referred to as a motional spiral 4. The base plates 3 and 4 are disposed such that the wall 3b of the stator 3 engages with the wall 4b of the orbiter 4. The motional spiral 4 is moved in circular orbit by an eccentric actuator. The walls 3b and 4b come into contact with each other on multiple points during the motion of the spiral 4 to define a number of continuous closed working chambers 5 within the walls 3b and 4b, and adjacent working chambers 5 of them limit different large volumes. The volumes and positions of the working chambers 5 are changed in response to the motion of the orbiter 4. The volumes of the working chambers 5 are gradually reduced to the centers of the helical walls 3b and 4b referred to as spiral walls. The eccentric actuator consists of a drive shaft 6 rotating about an axis of rotation 7 and an intermediate element 8. The drive shaft 6 is supported on the housing 2 by a first bearing 9. The orbiter 4 is eccentrically connected with the drive shaft 6 by the intermediate element 8, namely the axes of the orbiter 4 and the drive shaft 6 are offset from each other. The orbiter 4 is supported on the intermediate element 8 by a second bearing 10.

The conventional scroll compressor 1' also includes a guide device 11 that prevents the rotation of the motional spiral 4 and achieves the orbiting of the motional spiral 4. The guide device 11 generally includes a number of circular openings 11a arranged adjacently at a specific distance. Preferably, the openings 11a formed as blind holes are formed in the base plate 4a of the motional spiral 4. In addition, the guide device 11 includes pins 11b that are protrudingly formed on the wall 12 of the housing 2 and respectively engage into the openings 11a formed in the base plate 4a of the motional spiral 4. The first ends of the pins 11b protrude from the wall 12 and the second ends thereof are disposed within the wall 12 of the housing 2.

WO 2015 060038 A1 discloses a scroll compressor including a guide device to prevent the rotation of a motional spiral and achieve the orbiting thereof. The guide device includes openings formed in a base plate of the motional spiral and pins engage into the openings. The pins are pressed into a housing, particularly bores formed in the housing.

JP 2009-281280 discloses a scroll compressor with the cooling of a mechanism for adjusting the rotational position of a motional spiral. A component formed as a center plate of a housing includes through-bores for positioning guide pins for the motional spiral. Each of the guide pins is pressed into an associated one of the through-bores. The guide pins are cooled on the one hand by a refrigerant flowing between the center plate and the motional spiral and on the other hand by a refrigerant introduced into the through-bores from the side of center plate away from the motional spiral.

As illustrated in Figs. 1 and 2, the known scroll compressor 1' includes the wall 12 referred to as a facing wall 12 which is disposed in and fixed on the housing 2. A counter-pressure area 13 is defined between the facing wall 12 and the motional spiral 4. By the counter pressure occurring in the counter-pressure area 13, the motional spiral 4 applies force to the fixed spiral 3 fixed on the housing 2 such as the facing wall 12. To seal the counter-pressure area 13 and a suction area 14, a ring-shaped sealing element 15 is disposed between the motional spiral 4 and the facing wall 12. The motional spiral 4 has a surface 16 aligned toward the facing wall 2 on one end thereof. The sealing concept of the scroll compressor 1' includes a sliding element 17' formed as a plate together with the sealing element 15, and the sliding element is fixedly coupled to the housing, particularly the facing wall 12 without movement.

The plate-type fixed sliding element 17' disposed between the facing wall 12 and the spiral 4 is provided as a support surface of the surface of the motional spiral 4 together with the sealing element 15, and for compensation of friction generated by the relative motion between the facing wall 12 and the spiral 4. The sliding element 17' seals the suction area 14 and the counter-pressure area 13 from each other by a combination with the sealing element 15, the suction area 14 and the counter-pressure area 13 being pressure chambers to which two different pressures are applied. In addition, the sliding element 17' has to abut on the facing wall 12 of the housing 2 in a sealed manner. The sealed coupling is ensured by adhesion and lubricants, particularly refrigerant oil mixtures. The sliding element 17' is made of a material having very good tribological characteristics and has corrosion resistance and heat resistance. The scroll compressors 1' known in the art include the sliding element 17' disposed on the housing 2 with a very small wall thickness. The pins 11b, which are provided as guide elements and disposed within the facing wall 12, and the openings 11a, which are formed as pockets in the base plate 4a of the motional spiral 4, are circulated and thus provided to guide the spiral 4 in motion. In connection with the material of the housing 2, particularly the sealing and corrosion resistance thereof, the pins 11b must be made of aluminum. However, aluminum is not suitable in relation to tribological characteristics and strength.

In refrigerant passages through which carbon dioxide as a refrigerant with cooling technical sign R744 flows, the pressure level of suction pressure and discharge pressure occurring in the scroll compressor 1' is substantially higher than in the conventional refrigerant passages, namely a pressure difference in refrigerant within the working chambers 5 is substantially higher than, for example, in the scroll compressor 1' used in refrigerant passages through which R134a as a refrigerant flows. A higher pressure difference makes the force, which acts on the pins 11b from the orbiter 14, substantially larger. The pins 11b conventionally made of steel are position pins or guide pins and are separately pressed into the housing 2 made of aluminum, which have a significantly different expansion efficiency from the aluminum of the housing 2. Due to the substantially higher acting force, the significantly different expansion efficiencies between steel and aluminum, and the small strength of aluminum, the scroll compressor 1' known in the art has a high risk of misaligning the pins 11b within the wall 12 of the housing 2.

Other challenges are given in connection with an installation space to be optimized, particularly in the arrangement and formation of the bearings 9 and 10 relating to the changed requirements for accommodation of substantially larger force into the area of the second bearing 10. The installation space is limited due to the relatively small strength of aluminum and the reason is because the fixed minimum material thickness or wall thickness of the housing 2 is required between recesses for insertion of the pins 11b and the bearing 10. In addition, the motional spiral 4 is designed to be heavier by demands for higher action force thereon, and the immediate element 8 having a larger counterweight provided as the weight for compensating the imbalance of orbiter 4 is also formed. The immediate element 8, particularly the counterweight is disposed in the recess into which the bearing 10 is inserted. The installation space for the immediate element 8 is very limited.
US 2016 160646 A1 discloses a scroll type fluid machine including a rotation stopping mechanism that can reduce noise released to the outside of the scroll type fluid machine by damping vibration transmitted from a movable scroll to a casing. JP 2012 229 650 A provides a scroll type fluid machine having a simple constitution and capable of improving the durability of a thrust plate and a rotation preventive mechanism, and capable of reducing a noise level.

### DISCLOSURE

### TECHNICAL PROBLEM

An object of the present invention is therefore to provide an apparatus for compressing gas-phase fluid, particularly to improve a scroll compressor having a counter-pressure area and a suction area to which a fluid is applied at different pressure levels. The counter-pressure area can be sealed to the suction area in a sealed manner, and it is possible to compensate friction of an orbiter on a housing. Since position pins or guide pins of a guide device to prevent the rotation of the motional spiral and achieve the orbiting thereof are securely and continuously disposed, the maximum service life of the apparatus is ensured. The apparatus can be configured for the high pressure level of fluid. The apparatus must be easily implemented in its structure to minimize costs at the time of manufacture and maintenance.

### TECHNICAL SOLUTION

This object is achieved by a subject having the features of independent claim 1. Embodiments are defined by dependent claims.

The object is achieved by an apparatus for compressing a gas-phase fluid, particularly a refrigerant according to the present disclosure. The apparatus includes a housing having a wall, a non-motional stator having a base plate and a helical wall extending from one side of the base plate, and a motional orbiter having a base plate and a helical wall extending from the base plate. The base plates are disposed such that the wall of the stator and the wall of the orbiter engage with each other to define closed working chambers. The volumes and positions of the working chambers are changed in response to the motion of the orbiter. The apparatus also includes a guide device having at least one opening formed in the base plate of the orbiter and at least one pin fixedly coupled to and protruding from the housing. The pin engages into the opening formed in the base plate of the orbiter.

The apparatus further includes a sliding element disposed between the wall of the housing and the orbiter and fixedly coupled to the wall, wherein the at least one pin is pressed into an opening formed in the sliding element. The sliding element is pressed into and coupled to the housing by force-fit. The housing further comprises a recess having a side and a base surface, one circular ring surface of the sliding element abuts on the base surface of the recess, and the side of the recess is fitted and coupled to an outer jacket surface of the sliding element.

Preferably, the sliding element may have a circular ring disk shape that has an inner diameter, an outer diameter, a thickness, an outer jacket surface, and two circular ring surfaces.

According to a preferred embodiment of the present disclosure, the sliding element and the at least one pin may be made of materials in which values of strength and thermal expansion efficiency as material characteristics are in the same range. The meaning that there is in the same range is that the material characteristics such as strength and thermal expansion have only a negligible small deviation under the operating conditions such as specific pressure and temperature. Preferably, the sliding element may be made of steel.

In the embodiment of the present disclosure, the at least one pin may also be made of steel.

According to another preferred embodiment of the present disclosure, the sliding element may include a ring-shaped groove for accommodation of a sealing element formed as an O-ring. Preferably, the ring-shaped groove may be formed on an outer jacket surface of the sliding element. The sliding element and the sealing element may be provide to seal the suction area and counter-pressure area, separated from each other by the wall of the housing, particularly of the apparatus configured as a scroll compressor.

According to the embodiment of the present disclosure, the at least one opening formed in the sliding element for accommodation of the pin may be formed as a through-bore.

The at least one pin of the guide device may be disposed in the through-bore such that an end of the pin formed away from an end of the guide device engaging into the opening engages into an opening formed in the wall of the housing, on which the sliding element abuts, through the sliding element.

According to an alternative embodiment of the present disclosure, the apparatus may include pin elements formed to dispose within openings formed in the sliding element and to protrude into openings formed in the wall of the housing.

The pins of the guide device disposed in the through-bores and engaging into the openings formed in the wall of the housing through the sliding element and the pin elements protruding into the opening formed in the wall of the housing may prevent the rotation of the sliding element relative to the wall of the housing.

In summary, the apparatus according to the present disclosure has the following various features:
- the pins of the guide device can be optimally aligned, for example even for higher requirements for pressure and force acting during the use of carbon dioxide as a fluid to be compressed since the tilting of the pins is prevented;
- the wall thickness between the inner diameter of the housing in the counter-pressure area and the openings for accommodation of the pins of the guide device within the facing wall can be minimized;
- by providing a larger installation space within the counter-pressure area compared to the conventional scroll compressors, it is possible to dispose a larger bearing and a larger intermediate element, particularly a larger counterweight to support the orbiter on the intermediate element and thus the drive shaft; and
- it is possible to ensure the maximum service life of the apparatus configured for the high pressure levels of fluid.

Other individual matters, features, and advantages of the embodiments of the present disclosure are proposed in the following description of the embodiments with reference to the related drawings. The drawings illustrate the compression mechanism of the scroll compressor including the stator and orbiter defining the working chambers by the helical walls engaging with each other, the counter-pressure area defined between the orbiter and the housing, and the guide device to prevent the rotation of the motional spiral and achieve the orbiting thereof in section, respectively.

### ADVANTAGEOUS EFFECTS

An apparatus for compressing gas-phase fluid according to the present disclosure has the following effects:
- pins of a guide device can be optimally aligned, for example even for higher requirements for pressure and force acting during the use of carbon dioxide as a fluid to be compressed since the tilting of the pins is prevented;
- the wall thickness between the inner diameter of a housing in a counter-pressure area and openings for accommodation of the pins of the guide device within a facing wall can be minimized;
- by providing a larger installation space within the counter-pressure area compared to the conventional scroll compressors, it is possible to dispose a larger bearing and a larger intermediate element, particularly a larger counterweight to support an orbiter on an intermediate element and thus a drive shaft; and
- it is possible to ensure the maximum service life of the apparatus configured for the high pressure levels of fluid.

### BRIEF DESCRIPTION OF DRAWINGS

Figs. 1 and 2 are cross-sectional views of a conventional scroll compressor, respectively;
Fig. 3 is a cross-sectional view a scroll compressor having a plate-type sliding element for accommodation of pins of a guide device, which are pressed into and coupled to a housing by force-fit coupling;
Fig. 4 is a cross-sectional view a scroll compressor having a plate-type sliding element for accommodation of pins of a guide device, which are pressed into a housing by force-fit coupling; and
Figs. 5 and 6 are individual views of the sliding element of Fig. 4.

### BEST MODE FOR INVENTION

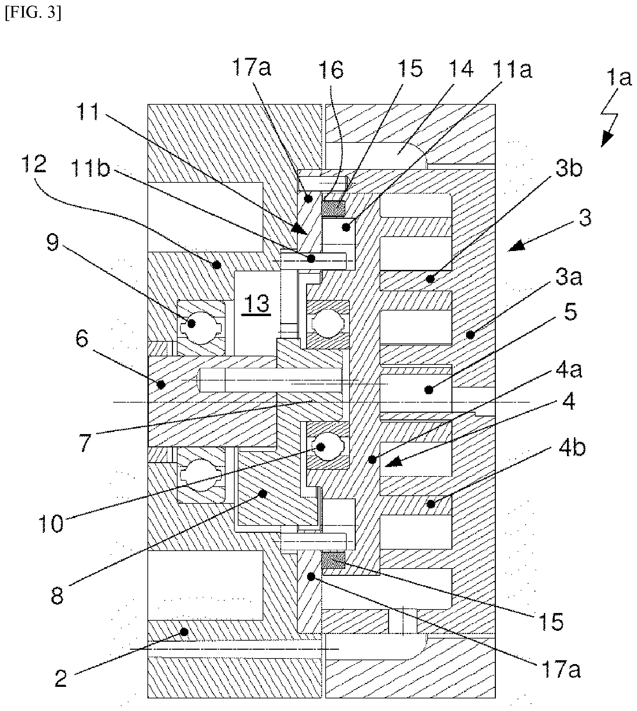

Fig. 3 illustrates an apparatus for compressing gas-phase fluid 1a, particularly a scroll compressor having a compression mechanism disposed in a housing 2, which consists of a stator 3 and an orbiter 4, in section. Helical walls 3b and 4b, which are respectively disposed on base plates 3a and 3a and engage with each other, define working chambers 5.

Since the orbiter 4 is moved in circular orbit by an eccentric actuator, the helical wall 4b orbits about the stationary helical wall 3b. During the relative motion of the helical walls 3b and 4b, the walls 3b and 4b come into contact with each other many times and define a number of working chambers 5 becoming smaller. The working chambers 5 become smaller and compress a fluid by the relative motion of two intertwined helical walls 3b and 4b. A gas-phase fluid to be compressed, particularly a refrigerant is sucked to be compressed in the apparatus 1a and discharged through an outlet which is not illustrated.

A drive shaft 6 driving the orbiter 4 is supported and maintained on the housing 2 by a first bearing 9, particularly a ball bearing. The drive shaft 6 and the first bearing 9 rotate about an axis of rotation 7 of the drive shaft 6. The first bearing 9 is disposed around the drive shaft 6 and the areas of the outer surface and side thereof abut on a wall 12 of the housing 2. The drive shaft 6 is mechanically connected to the orbiter 4 with eccentricity by an intermediate element 8 and a second bearing 10. The wall 12 limits a counter-pressure area 13 defined between the orbiter 4 and the housing 2 and forms a separation wall between the counter-pressure area 13 and a suction area 14. The counter-pressure area 13 is defined on the rear of the base plate 4a of the motional spiral 4 with respect to the helical wall 4b and provided to apply the pressure of the motional spiral 4 to the fixed spiral 3. An intermediate pressure between suction pressure and discharge pressure of a gas-phase fluid is substantially applied to the counter-pressure area 13 referred to as a counter-pressure chamber.

To seal the counter-pressure area 13 and the suction area 14 from each other, a ring-shaped sealing element 15 is disposed between the facing wall 12 and the surface 16 of the motional spiral 4 aligned toward the facing wall 12. The sealing concept with the sealing element 15 includes a sliding element 17a formed as a plate, and the sliding element is disposed between the facing wall 12 and the spiral 4. The plate-type fixed sliding element 17a provides a contact surface to the surface of the motional spiral 4 together with the sealing element 15 and is provided for compensation of friction occurring during the relative motion between the facing wall 12 and the spiral 4. The suction area 14 and the counter-pressure area 13 are sealed from each other by the sliding element 17a and the sealing element 15. In addition, the sliding element 17a abuts on the facing wall 12 of the housing 2 in a sealed manner, and the sealed coupling is ensured by adhesion and lubricants, particularly refrigerant oil mixtures. To reduce frictional heat occurring during the motion of the helical walls 3b and 4b and during the motion of the helical wall 4b of the orbiter 4 relative to the facing wall 12, and to improve sealing between the limited surfaces of the waking chambers 5 and between the counter-pressure area 13 and the suction area 14, a lubricant is provided for a fluid.

The apparatus 1a includes a guide device 11 to prevent the rotation of the motional spiral 4 and achieve the orbiting thereof. The guide device 11 includes a number of circular openings 11a and pins 11b formed in a direction of the counter-pressure area 13 in the base plate 4a of the orbiter 4. The first ends of the pins 11b protrude into the openings 11a and the second ends thereof are coupled to the housing 2. The pins 11b formed as position elements and guide elements and the openings 11a formed as recesses in the base plate 4a of the motional spiral 4 are provided to guide the motional spiral 4.

The sliding element 17a made of a corrosion-resistant and heat-resistant material having very good tribological characteristics such as steel is coupled to the housing 2, particularly the facing wall 12 without being fixed and moved thereto.

The pins 11b made of steel as well are arranged in the openings, particularly through-bores formed in the sliding element 17a, respectively. The pins 11b are pressed into the openings by the sliding element 17a. Since each of the pins 11b and the sliding element 17a which are made of steel have a very high strength and a similar thermal expansion efficiency, different thermal expansions between the pins 11b and the sliding element 17a are prevented. This prevents the wall 12 of the housing 2 and thus the pins 11b to the openings 11a of the motional spiral 4 from tilting during the operation of the apparatus 1a. The pins 11b are continuously disposed in position and in parallel to each other, thereby ensuring an optimal guide condition for the motional spiral 4.

The sliding element 17a is coupled to the housing 2 by external force-fit. The sliding element 17a formed as a plate-type or circular ring disk is pressed into the housing 2 in the area of an outer jacket, which ensures the optimal guide of the sliding element 17a in the housing. The housing 2 includes a recess having a side and a base surface in the area of the facing wall 12. In an assembled state, one circular ring surface of the sliding element 17a abuts on the base surface of the recess of the housing 2, and the side of the recess is coupled to the outer jacket surface of the sliding element 17a by force-fit. In addition to or instead of the external force-fit, the sliding element 17a is supported in the housing 2 by at least one pin element which is not illustrated, and the pin element prevents the sliding element 17a from rotating relative to the housing 2. Preferably, one or two pin elements referred to as rotation prevention pins are used.

In particular, as illustrated in Fig. 3, the pins 11b of the guide device 11 are arranged to achieve the function of the rotation prevention pins. The pins 11b are arranged to protrude into the facing wall 12 through the sliding element 17a abutting on the facing wall 12. The openings provided to accommodate the pins 11b in the sliding element 17a are formed as through-openings. To accommodate the pins 11b, preferably openings or recesses are formed in the facing wall 12. In the case where the pins 11b are disposed to pass through the openings formed in the wall 12 through the sliding element 17a, the sliding element 17a is fixed on the housing 2.

By forming the sliding element 17a as a circular ring disk made of steel with a large inner diameter, the inner diameter of the circular ring disk becomes large by the high strength of material. Thus, the inner diameter of the substantially hollow cylindrical-type area of the housing 2, which is limited by the facing wall 12 and provided to accommodate the bearings 9 and 10 of the intermediate element 8, also becomes large. Therefore, the counter-pressure area 13 has a large inner diameter. The large inner diameter of the housing 2 and the large inner diameter of the sliding element 17a in the area of the counter-pressure chamber 13 create a large installation space for the bearings 9 and 10, particularly the second bearing 10 to support the orbiter on the intermediate element 8. The wall thickness between the pin bore in the sliding element 17a and in some cases the facing wall 12 and the bore for the bearing 10 is minimized by the very high strength of steel which is a material of the sliding element 17a and the pins 11b. The installation space for the bearing 10 is increased. The expansion of the installation space in the counter-pressure area 13 allows the volume of the intermediate element 8 to be large and thus ensures the use of a heavier counterweight.

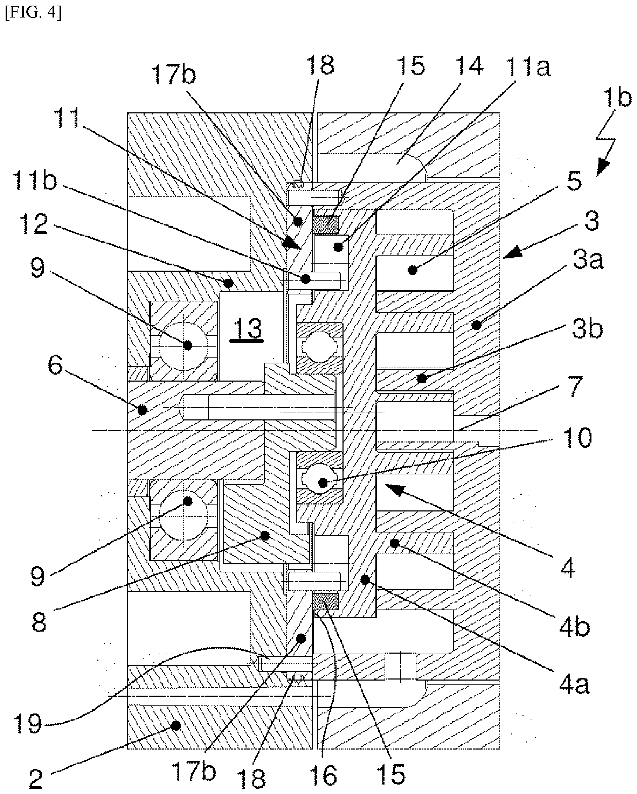

Fig. 4 illustrates an apparatus for compressing gas-phase fluid 1b, particularly a scroll compressor having a plate-type sliding element 17b to accommodate the pins 11b of the guide device 11. The difference from the apparatus 1a illustrated in Fig. 3 is in that the sliding element 17b includes a groove 18, particularly a ring-shaped groove 18 for accommodation of an O-ring. The groove 18 and the O-ring as a sealing element disposed in the groove extend on the outer jacket surface of the circular ring disk and seal the sliding element 17b to the facing wall 12 and thus the housing 2.

The sliding element 17b is coupled to the housing 2 by external force-fit. The sliding element 17b formed as a circular ring disk is pressed into and put in the housing 2 in the area of the outer jacket. In addition to the individual fit coupling, the sliding element 17b may be disposed to be supported in the housing 2 by at least one pin element 19 that prevents the rotation of the sliding element 17b relative to the housing 2. Preferably, one or two pin elements 19 referred to as rotation prevention pins are used. The pin elements 19 are disposed within the openings formed in the sliding element 17b and protrude into the openings formed in the housing wall 12.

In the apparatus 1b including the ring-shaped groove 18 and the sliding element 17b having the O-ring, several and repetitive assembly and disassembly are possible, unlike the apparatus 1a, illustrated in Fig. 3, including the sliding element 17a disposed by force-fit coupling. The sealing of the counter-pressure area to the suction area 14 is always recoverable.

In addition, the apparatus 1b may be provided with an intermediate element 8 that has a larger volume and thus has a heavier counterweight. It is possible to more flexibly use the provided installation space because the intermediate element 8, particularly the counterweight may have an undercut shape.

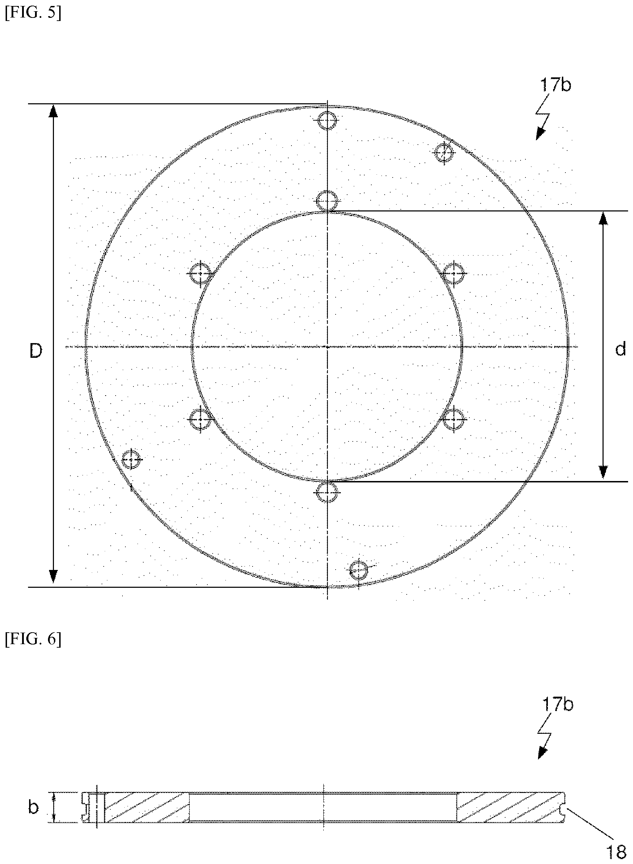

Figs. 5 and 6 are individual views illustrating the sliding element 17b of the apparatus 1b illustrated in Fig. 4. The circular ring disk type sliding element 17b has an inner diameter d, an outer diameter D, and a thickness b. The thickness b ranges from 4 mm to 8 mm, particularly is made of about 6 mm. The inner diameter ranges from 50 mm to 55 mm, particularly is made of about 53 mm. The outer diameter ranges from 90 mm to 100 mm, particularly is made of about 96 mm.

The pins 11b are guided or inserted into the sliding element 17b within the openings formed in the area of the inner diameter d, and the openings are uniformly distributed and arranged at the same distance. In contrast, the pin elements 19 are rotation prevention pins, which are inserted into the sliding element 17b within the openings formed in the area of the outer diameter D.

### INDUSTRIAL APPLICABILITY

The present disclosure relates to an apparatus for compressing a gas-phase fluid, particularly a refrigerant. The apparatus includes a housing having a wall, a non-motional stator having a base plate and a helical wall extending from a first side of the base plate, and a motional orbiter having a base plate and a helical wall extending from the base plate. The base plates are disposed such that the wall of the stator and the wall of the orbiter engage with each other to define closed working chambers. The volumes and positions of the working chambers are changed in response to the motion of the orbiter.

## Claims

1. An apparatus for compressing gas-phase fluid (1a, 1b), comprising:
- a housing (2) having a wall (12);
- a non-motional stator (3) having a base plate (3a) and a helical wall (3b) extending from one side of the base plate (3 a);
- a motional orbiter (4) having a base plate (4a) and a helical wall (4b) extending from the base plate (4a), the base plates (3a, 4a) being disposed such that the wall (3b) of the stator (3) and the wall (4b) of the orbiter (4) engage with each other to define closed working chambers (5), volumes and positions of the working chambers (5) being changed in response to motion of the orbiter (4);
- a guide device (11) having at least one opening (11a) formed in the base plate (4a) of the orbiter (4) and at least one pin (11b) fixedly coupled to and protruding from the housing, the pin (11b) engaging into the opening (11a); and
- a sliding element (17a, 17b) disposed between the wall (12) of the housing (2) and the orbiter (4) and fixedly coupled to the wall (12),
wherein the at least one pin (11b) is pressed into an opening formed in the sliding element (17a, 17b),
**characterized in that**
the sliding element (17a, 17b) is pressed into and coupled to the housing (2) by force-fit, and
the housing (2) comprises a recess having a side and a base surface, one circular ring surface of the sliding element (17a, 17b) abuts on the base surface of the recess, and the side of the recess is fitted and coupled to an outer jacket surface of the sliding element (17a, 17b).

2. The apparatus according to claim 1, wherein
the sliding element (17a, 17b) has a circular ring disk shape that has an inner diameter (d), an outer diameter (D), a thickness (b), an outer jacket surface, and two circular ring surfaces.

3. The apparatus according to claim 1, wherein
the sliding element (17a, 17b) and the at least one pin (11b) are made of materials in which values of strength and thermal expansion coefficient as material characteristics are in the same range.

4. The apparatus according to claim 1, wherein
the sliding element (17a, 17b) is made of steel.

5. The apparatus according to claim 1, wherein
the at least one pin (11b) is made of steel.

6. The apparatus according to claim 1, wherein
the sliding element (17b) comprises a ring-shaped groove (18) for accommodation of a sealing element formed as an O-ring.

7. The apparatus according to claim 6, wherein
the ring-shaped groove (18) is formed on an outer jacket surface of the sliding element (17b).

8. The apparatus according to claim 1, wherein
the at least one opening formed in the sliding element (17a, 17b) for accommodation of the pin (11b) is formed as a through-bore.

9. The apparatus according to claim 8, wherein
the at least one pin (11b) of the guide device (11) is disposed in the through-bore such that an end of the pin (11b) formed away from an end of the guide device (11) engaging into the opening (11a) engages into an opening formed in the wall (12) of the housing (2) through the sliding element (17a).

10. The apparatus according to claim 1, wherein
the apparatus comprises pin elements (19) formed to dispose within openings formed in the sliding element (17b) and to protrude into openings formed in the wall (12) of the housing (2).

## Patentansprüche

1. Einrichtung zum Verdichten eines Gasphasenfluids (1a, 1b), umfassend:
- ein Gehäuse (2), das eine Wand (12) aufweist;
- einen nichtbeweglichen Stator (3), der eine Bodenplatte (3a) und eine spiralförmige Wand (3b), die sich von einer Seite der Bodenplatte (3a) erstreckt, aufweist;
- einen beweglichen Orbiter (4), der eine Bodenplatte (4a) und eine spiralförmige Wand (4b), die sich von der Bodenplatte (4a) erstreckt, aufweist, wobei diese Bodenplatten (3a, 4a) derart angeordnet sind, sodass die Wand (3b) des Stators (3) und die Wand (4b) des Orbiters (4) ineinandergreifen, um geschlossene Arbeitskammern (5) zu definieren, wobei Volumen und Positionen der Arbeitskammern (5) als Reaktion auf eine Bewegung des Orbiters (4) verändert werden;
- eine Führungsvorrichtung (11), die mindestens eine Öffnung (11a) aufweist, die in der Bodenplatte (4a) des Orbiters (4) gebildet ist, und mindestens einen Stift (11b), der fest mit dem Gehäuse verkoppelt ist und von diesem hervorsteht, aufweist, wobei der Stift (11b) in die Öffnung (11a) eingreift; und
- ein Schiebeelement (17a, 17b), das zwischen der Wand (12) des Gehäuses (2) und dem Orbiter (4) angeordnet und fest mit der Wand (12) verkoppelt ist,
wobei der mindestens eine Stift (11b) in eine Öffnung gepresst wird, die in dem Schiebeelement (17a, 17b) gebildet ist,
**dadurch gekennzeichnet, dass**
das Schiebeelement (17a, 17b) kraftschlüssig in das Gehäuse (2) gepresst und mit diesem verkoppelt ist, und
das Gehäuse (2) eine Aussparung umfasst, die eine Seite und eine Grundfläche aufweist, wobei eine kreisförmige Ringfläche des Schiebeelements (17a, 17b) an die Grundfläche der Aussparung angrenzt und die Seite der Aussparung in die äußere Mantelfläche des Schiebeelements (17a, 17b) eingepasst und mit diesem verkoppelt ist.

2. Einrichtung nach Anspruch 1, wobei
das Schiebeelement (17a, 17b) eine kreisförmige Ringscheibenform aufweist, die einen Innendurchmesser (d), einen Außendurchmesser (D), eine Dicke (b), eine äußere Mantelfläche und zwei kreisförmige Ringflächen aufweist.

3. Einrichtung nach Anspruch 1, wobei
das Schiebeelement (17a, 17b) und der mindestens eine Stift (11b) aus Materialien bestehen, bei denen die Werte der Stärke und des Wärmeausdehnungskoeffizienten als Materialmerkmale in demselben Bereich liegen

4. Einrichtung nach Anspruch 1,
wobei das Schiebeelement (17a, 17b) aus Stahl besteht.

5. Einrichtung nach Anspruch 1,
wobei der mindestens eine Stift (11b) aus Stahl besteht.

6. Einrichtung nach Anspruch 1, wobei
das Schiebeelement (17b) eine ringförmige Nut (18) zur Aufnahme eines Schiebeelements, das als ein O-Ring gebildet ist, umfasst.

7. Einrichtung nach Anspruch 6, wobei
die ringförmige Nut (18) an einer äußeren Mantelfläche des Schiebeelements (17b) gebildet ist.

8. Einrichtung nach Anspruch 1, wobei
mindestens eine Öffnung in dem Schiebeelement (17a, 17b) zur Aufnahme des Stifts (11b) als eine Durchgangsbohrung gebildet ist.

9. Einrichtung nach Anspruch 8, wobei
der mindestens eine Stift (11b) der Führungsvorrichtung (11) derart in der Durchgangsbohrung angeordnet ist, sodass ein Ende des Stifts (11b), das entfernt von einem Ende der Führungsvorrichtung (11) gebildet ist, der in die Öffnung (11a) eingreift, in eine Öffnung eingreift, die in der Wand (12) des Gehäuses (2) durch das Schiebeelement (17a) hindurch gebildet ist.

10. Einrichtung nach Anspruch 1, wobei
die Einrichtung Stiftelemente (19) umfasst, die gebildet sind, um innerhalb der in dem Schiebeelement (17b) gebildeten Öffnungen angeordnet zu sein und um in die in der Wand (12) des Gehäuses (2) gebildeten Öffnungen hineinzuragen.

## Revendications

1. Appareil pour compresser un fluide en phase gazeuse (1a, 1b), comprenant :
- un boîtier (2) présentant une paroi (12) ;
- un stator non mobile (3) présentant une plaque de base (3a) et une paroi hélicoïdale (3b) s'étendant à partir d'un côté de la plaque de base (3a) ;
- un orbiteur mobile (4) présentant une plaque de base (4a) et une paroi hélicoïdale (4b) s'étendant à partir de la plaque de base (4a), les plaques de base (3a, 4a) étant disposées de sorte que la paroi (3b) du stator (3) et la paroi (4b) de l'orbiteur (4) viennent en prise l'une avec l'autre pour définir des chambres de travail fermées (5), des volumes et des positions des chambres de travail (5) étant changés en réponse à un mouvement de l'orbiteur (4) ;
- un dispositif de guidage (11) présentant au moins une ouverture (11a) formée dans la plaque de base (4a) de l'orbiteur (4) et au moins une broche (11b) accouplée à demeure au et faisant saillie à partir du boîtier, la broche (11b) venant en prise dans l'ouverture (11a); et
- un élément coulissant (17a, 17b) disposé entre la paroi (12) du boîtier (2) et l'orbiteur (4) et accouplé à demeure à la paroi (12),
dans lequel la au moins une broche (11b) est enfoncée dans une ouverture formée dans l'élément coulissant (17a, 17b),
**caractérisé en ce que**
l'élément coulissant (17a, 17b) est enfoncé dans le et accouplée au boîtier (2) par ajustage à force, et
le boîtier (2) comprend un creux présentant un côté et une surface de base, une surface en anneau circulaire de l'élément coulissant (17a, 17b) s'appuie sur la surface de base du creux, et le côté du creux est ajusté sur et accouplé à une surface d'enveloppe extérieure de l'élément coulissant (17a, 17b).

2. Appareil selon la revendication 1, dans lequel
l'élément coulissant (17a, 17b) présente une forme de disque en anneau circulaire qui présente un diamètre intérieur (d), un diamètre extérieur (D), une épaisseur (b), une surface d'enveloppe extérieure et deux surfaces en anneau circulaires.

3. Appareil selon la revendication 1, dans lequel
l'élément coulissant (17a, 17b) et la au moins une broche (11b) sont faits de matériaux dans lesquels des valeurs de résistance et de coefficient de dilatation thermique en tant que caractéristiques de matériaux sont dans la même plage.

4. Appareil selon la revendication 1,
dans lequel l'élément coulissant (17a, 17b) est fait d'acier.

5. Appareil selon la revendication 1,
dans lequel la au moins une broche (11b) est faite d'acier.

6. Appareil selon la revendication 1, dans lequel
l'élément coulissant (17b) comprend une rainure en forme d'anneau (18) pour la réception d'un élément d'étanchéité formé comme un joint torique.

7. Appareil selon la revendication 6, dans lequel
la rainure en forme d'anneau (18) est formée sur une surface d'enveloppe extérieure de l'élément coulissant (17b).

8. Appareil selon la revendication 1, dans lequel
la au moins une ouverture formée dans l'élément coulissant (17a, 17b) pour la réception de la broche (11b) est formée comme un alésage débouchant.

9. Appareil selon la revendication 8, dans lequel
la au moins une broche (11b) du dispositif de guidage (11) est disposée dans l'alésage débouchant de sorte qu'une extrémité de la broche (11b) formée à distance d'une extrémité du dispositif de guidage (11) venant en prise dans l'ouverture (11a) vienne en prise dans une ouverture formée dans la paroi (12) du boîtier (2) par l'intermédiaire de l'élément coulissant (17a).

10. Appareil selon la revendication 1, dans lequel
l'appareil comprend des éléments broches (19) formés pour être disposés dans des ouvertures formées dans l'élément coulissant (17b) et pour faire saillie dans des ouvertures formées dans la paroi (12) du boîtier (2).
